# EUROPÄISCHE PATENTANMELDUNG

(11) **EP 2 228 888 A1**
(43) Veröffentlichungstag der Anmeldung: **15.09.2010**
(21) Anmeldenummer: 09003399.4
(22) Anmeldetag: 09.03.2009
(51) Int. Cl.: H02K 3/16, H02K 3/487

(54) **Rotor für einen Turbogenerator sowie Turbogenerator mit einem Rotor**

(71) Anmelder: Siemens Aktiengesellschaft, 80333 München (DE)
(72) Erfinder: Kowalski, Waldemar, 45472 Mülheim an der Ruhr (DE); Lehmann, Christoph, Dr., 47506 Neukirchen-Vluyn (DE)

(57) **Zusammenfassung**

Der Rotor (2) für einen Turbogenerator (1) umfasst
- eine zylinderförmige sich mittig zu einem Rotorballen (7) verdickende Rotorwelle (5),
- in den Zylindermantel (20) des Rotorballens (7) eingebrachte, in Umfangsrichtung (12) zueinander durch Rotorzähne (22) beabstandete und in Wellenlängsrichtung (6) verlaufende Nuten (21),
- von den Nuten (21) aufgenommene Leiterstäbe (24), die beidendseitig über jeweils an einem Wickelkopf gelagerte Tangentialleiter miteinander leitend verbunden sind zur Bildung einer Erregerwicklung (23) und
- einen Nutverschlusskeil (27) je Nut (21).

Die Nutverschlusskeile (27) sind als Leiterstäbe ausgebildet. Sie bestehen aus einem leitenden metallischen Werkstoff bestehen und sind durch an den Wickelköpfen gelagerte Verbindungsleiter miteinander leitend verbunden zur Vergrößerung der Erregerwicklung (23).

## Beschreibung

### Beschreibung

Rotor für einen Turbogenerator sowie Turbogenerator mit einem Rotor

Die Erfindung bezieht sich auf einen Rotor für einen Turbogenerator sowie auf einen Turbogenerator mit einem derartigen Rotor.

Ein Turbogenerator ist beispielsweise aus der EP 1 742 330 A1 bekannt. Er weist einen antreibbaren, drehbeweglich gelagerten Rotor, auch Läufer genannt, und einen den Rotor umgebenden ortsfesten Stator, auch Ständerteil genannt, auf. Der Rotor umfasst eine zylinderförmige Rotorwelle, die sich in Wellenlängsrichtung mittig zu einem Rotorballen verdickt. Der Rotorballen wird auch als Läuferballen bezeichnet. Auf dem Rotorballen ist eine mit einem Strom beaufschlagbare Erregerwicklung angeordnet. Der Stator weist eine Statorwicklung auf. Zur Erzeugung von elektrischer Energie ist die Rotorwelle mit einem Antrieb, insbesondere mit einer Antriebswelle einer Turbine, gekoppelt. Auf diese Weise lässt sich der Rotor in eine Drehbewegung gegenüber dem ortsfesten Stator versetzen. Wird dabei der Rotor von einem Strom durchflossen, so wird ein magnetisches Drehfeld erzeugt, das in der Statorwicklung einen elektrischen Strom induziert. Heutzutage weist ein Turbogenerator eine elektrische Leistung zwischen 100 MW und 1.500 MW auf.

Aus der US 3,119,033 ist bekannt, den Zylindermantel des Rotorballens mit in Wellenlängsrichtung verlaufenden und in Umfangsrichtung zueinander beabstandeten Nuten zu versehen und die Erregerwicklung in diesen Nuten anzuordnen. In den Nuten sind dazu eine Mehrzahl von in Wellenlängsrichtung verlaufenden und gegeneinander isolierten Leiterstäben übereinander gestapelt. Zur Zylindermantelfläche des Rotorballens hin ist ein in eine Profilierung eingeschobener Nutverschlusskeil zum Absichern der Leiterstäbe gegen die bei der Umdrehung des Rotors herrschenden Fliehkräfte vorgesehen.

Aus der Auslegeschrift 1 036 997 ist bekannt, in nebeneinander liegenden Nuten gelagerte Leiterstäbe endseitig über in Umfangsrichtung der Welle verlaufende Tangentialleiter leitend miteinander zu verbinden zur Bildung der Erregerwicklung. Die Verbindung der Leiterstäbe mit den Tangentialleitern erfolgt insbesondere durch Verlöten. Die Tangentialleiter sind auf einem zwischen dem Wellenende und dem Ansatz des Rotorballens ausgebildeten Wellenschenkel gelagert. Sie bilden einen sogenannten Wickelkopf. Sie sind mit einer Rotorkappe gegen die bei der Drehbewegung des Rotors herrschenden Fliehkräfte abgesichert.

Bei einem Turbogenerator besteht das Bestreben, eine möglichst hohe elektrische Leistung zu erreichen. Die erreichbare elektrische Leistung eines Turbogenerators hängt unter anderem von der Magnetfeldstärke des magnetischen Drehfelds ab, das von der Erregerwicklung des Rotors erzeugt wird. Je höher die Magnetfeldstärke, desto höher ist entsprechend die elektrische Leistung des Turbogenerators.

Der Erfindung liegt daher die Aufgabe zugrunde, einen Rotor für einen Turbogenerator anzugeben, mit dem sich ein magnetisches Drehfeld einer hohen Magnetfeldstärke erzeugen lässt. Weiterhin liegt der Erfindung die Aufgabe zugrunde, einen Turbogenerator mit einem derartigen Rotor anzugeben.

Bezüglich des Rotors wird die Aufgabe erfindungsgemäß gelöst durch die Merkmalskombination des Anspruchs 1. Dabei wird erkannt, dass die Nutverschlusskeile ebenfalls wie die Leiterstäbe der Erregerwicklung durchgängig in Wellenlängsrichtung über die Länge des gesamten Rotorballens ausgebildet sind. Entsprechend werden die Nutverschlusskeile nunmehr als Leiterstäbe ausgebildet und bestehen aus einem leitenden metallischen Werkstoff. An den Wickelköpfen sind Verbindungsleiter gelagert, die die Nutverschlusskeile miteinander leitend verbinden zur Vergrößerung der Erregerwicklung. Durch das Einbeziehen der Nutverschlusskeile in die Erregerwicklung lässt sich die magnetische Feldstärke des magnetischen Drehfeldes des Rotors vergrößern. So lässt sich die elektrische Leistung des Turbogenerator steigern.

Die Verbindungsleiter zum Verbinden benachbarter Nutverschlusskeile sind zweckmäßig oberhalb der zum Verbinden der Leiterstäbe untereinander vorgesehenen Tangentialleiter angeordnet. Gegenüber der bisherigen Fertigung eines Rotors ändert sich die Fertigung somit lediglich dahingehend, dass oberhalb der Tangentialleiter im Bereich der beiden Wickelköpfe eine Schicht an Verbindungsleitern angeordnet ist, die den Tangentialleitern vergleichbar oder identisch ausgebildet kann. Die Verbindungsleiter bestehen wie die Tangentialleiter aus einem leitfähigen Werkstoff, insbesondere aus Kupfer oder aus einer Kupferlegierung.

Gegebenenfalls wird bei der Fertigung der Durchmesser der Rotorkappe auf den nunmehr mit einer Lage von Tangentialleitern bzw. Verbindungsleitern mehr versehenen Wickelkopf angepasst.

In einer zweckmäßigen Weiterbildung sind die Nutverschlusskeile mit den Verbindungsleitern verlötet. Mit anderen Worten werden die Nutverschlusskeile mit den Verbindungsleitern in derselben Weise leitend verbunden, wie die Leiterstäbe mit den unter den Verbindungsleitern liegenden Tangentialleitern. Das Verlöten gewährleistet ein einfaches Verbinden und eine sichere elektrische Kontaktierung der Verbindungsleiter mit den Nutverschlusskeilen.

Zweckmäßig ist jeder Nutverschlusskeil von einer Isolierung umgeben. Auf diese Weise ist gewährleistet, dass es zu keinen Kurzschlüssen zwischen dem Nutverschlusskeil und der dem Nutverschlusskeil zugewandten Seite der Erregerwicklung kommt.

Diese Isolierung ist zweckmäßig als Pulverlackbeschichtung ausgeführt. Bei einer Pulverlackbeschichtung wird ein elektrisch leitfähiges Werkstück, in diesem Fall der Nutverschlusskeil, mit elektrisch aufgeladenen Pulverlackpartikeln beschichtet. Derartige Pulverlackpartikel weisen üblicherweise einen sehr hohen spezifischen elektrischen Widerstand auf. Mit anderen Worten sind Pulverlacke Isolatoren. Die Ladung der Pulverlackpartikel bleibt nach dem Aufladen über lange Zeit erhalten, so dass der Pulverlack sicher auf dem Werkstück haftet. An die Pulverlackbeschichtung schließt sich üblicherweise eine Wärmebehandlung an, bei der die Pulverlackschicht mit dem Werkstück durch Einbrennen bei einer hohen Temperatur verbunden wird.

Die Leiterstäbe sind üblicherweise aus Kupfer gefertigt, da Kupfer eine hohe elektrische Leitfähigkeit aufweist. Kupfer ist jedoch ein vergleichsweise weicher Werkstoff mit einer geringen mechanischen Festigkeit. In einer zweckmäßigen Weiterbildung sind daher die Nutverschlussteile aus einem Werkstoff mit einer hohen mechanischen Festigkeit gefertigt. Auf diese Weise ist gewährleistet, dass sich die Nutverschlusskeile unter dem Einfluss der Fliehkräfte bei der Drehbewegung des Rotors nicht verformen. Es kommt entsprechend nicht zu einer Lockerung der von den Nutverschlusskeilen gehaltenen Erregerwicklung. Zweckmäßig sind daher die Nutverschlusskeile aus einem Bronzewerkstoff oder aus einem anderen leitfähigen Werkstoff gefertigt. Der Werkstoff weist hierbei eine genügend hohe elektrische Leitfähigkeit, gleichzeitig aber auch eine hohe mechanische Festigkeit auf, so dass er als Werkstoff für die Nutverschlusskeile einsetzbar ist. Seine elektrische Leitfähigkeit liegt dabei üblicherweise jedoch unter der elektrischen Leitfähigkeit von Kupfer.

In einer zweckmäßigen Weiterbildung sind die Nutverschlusskeile derart ausgestaltet, dass sie hinsichtlich ihres Leitwerts im Wesentlichen den unter ihnen angeordneten Leiterstäben der Erregerwicklung entsprechen. Dies lässt sich in einfacher Weise über die Querschnittsfläche der Nutverschlusskeile erreichen. Indem der Nutverschlusskeil mit einem größeren Querschnitt ausgeführt wird als der unter ihm liegende Leiterstab, wird ausgeglichen, dass der üblicherweise aus Kupfer gefertigte Leiterstab eine bedeutend bessere Leitfähigkeit aufweist. Die auf den Wickelköpfen gelagerten Verbindungsleiter können jedoch aus Kupfer gefertigt sein, da sie von der Rotorkappe gegen Fliehkräfte abgesichert sind.

Zweckmäßig kann jeder Nutverschlusskeil beidendseitig an seinen von einer Rotorkappe jeweils aufgenommenen Endabschnitten ein zur jeweiligen Rotorkappe gewandtes Isolationszwischenstück aufweisen. Auf diese Weise kann der Nutverschlusskeil zusätzlich zu seiner Pulverlackbeschichtung gegen die Rotorkappe isoliert sein. Somit ist das Auftreten von Kurzschlussströmen im Bereich der Rotorkappe sinnvoll vermieden.

Die zwischen den einzelnen Nuten ausgebildeten in Wellenlängsrichtung verlaufenden Erhebungen bzw. Trennwände werden auch als Rotorzähne bezeichnet. Zweckmäßig sind an diesen Rotorzähnen in Wellenlängsrichtung verlaufende und aus einem leitenden Werkstoff bestehende Dämpferstäbe angeordnet, die endseitig mit den beiden Rotorkappen leitend verbunden sind. Mit anderen Worten bilden diese Dämpferstäbe gemeinsam eine Art Käfig, sodass sich ein nicht synchron umlaufendes Magnetfeld dämpfen lässt. Somit lassen sich Netzschwankungen ausgleichen.

Zur Anordnung der Dämpferstäbe an den Rotorzähnen sind zweckmäßig in Wellenlängsrichtung verlaufende nutförmige Dämpferstabaufnahmen zur Aufnahme der Dämpferstäbe vorgesehen. Da die Dämpferstäbe keine Haltefunktion aufweisen, können sie auch aus einem Kupferwerkstoff mit einer hohen Leitfähigkeit gefertigt sein.

Bezüglich des Turbogenerators wird die obige Aufgabe erfindungsgemäß gelöst durch die Merkmale des Anspruchs 13. Danach umfasst der Turbogenerator einen Rotor nach einem der Ansprüche 1 bis 12.

Nachfolgend wird ein Ausführungsbeispiel der Erfindung anhand einer Zeichnung näher erläutert.
Darin zeigen die einzelnen Figuren:
- FIG 1: eine Turbogenerator mit einem Rotor und einem Stator;
- FIG 2: einen Schnitt quer zur Wellenlängsrichtung durch eine Nut mit einer in der Nut angeordneten Erregerwicklung im Bereich des Zylindermantel eines Rotorballens des Rotors; sowie
- FIG 3: einen zweiten Schnitt durch die Nut aus FIG 2 im von einer Rotorkappe überdeckten Bereich der Nut.

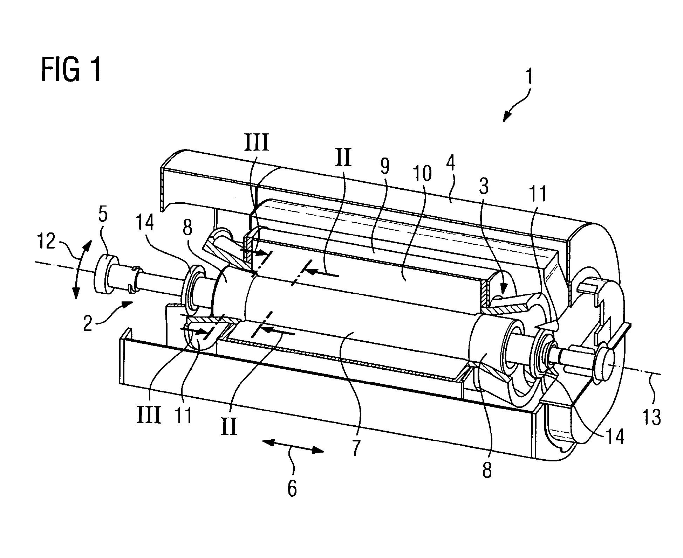

FIG 1 zeigt einen Turbogenerator 1 mit einem Rotor 2 und einem den Rotor aufnehmenden Stator 3. Der Rotor 2 wird auch als Läufer, der Stator 3 auch als Ständer bzw. Ständerteil bezeichnet. Der Rotor 2 und der Stator 3 sind von einem gemeinsamen gasdichten Gehäuse 4 aufgenommen. Der Rotor 2 umfasst eine Rotorwelle 5, die sich in Wellenlängsrichtung 6 mittig zu einem Rotorballen 7 verdickt. Der Rotorballen 7 wird auch als Läuferballen oder als Aktivteil bezeichnet. Auf der Zylindermantelfläche des Rotorballens 7 ist eine in der Figur nicht dargestellte Erregerwicklung angeordnet. Die von der Wellenlängsrichtung 6 her gesehen beiden Enden des Rotorballens 7 weisen jeweils eine Rotorkappe 8 auf. Der den von der Wellenlängsrichtung 6 her gesehen den Rotorballen 7 umschließende Abschnitt des Stators 3 wird als Statoraktivteil 9 bzw. als Ständeraktivteil bezeichnet. Das Statoraktivteil 9 weist einen ferromagnetischen Hohlkörper 10 auf, in dem nicht zu sehende Statorleiter bzw. Ständerleiter angeordnet sind. Von der Wellenlängsrichtung 6 her gesehen schließt sich an die beiden Enden des Statoraktivteils 9 jeweils ein Statorwickelkopf 11 an, der auch als Ständerwickelkopf bezeichnet wird.

Die Erregerwicklung des Rotors 2 ist mit einem Strom beaufschlagbar. Die Rotorwelle 5 ist mit einer Antriebswelle einer nicht dargestellten Turbine koppelbar und von der Turbine in eine Drehbewegung versetzbar. Wird nun der Rotor 3 in eine Drehbewegung in Umfangsrichtung 12 um seine Mittellängsachse 13 herum versetzt, so erzeugt er ein magnetisches Drehfeld. Dieses magnetische Drehfeld durchsetzt die nicht dargestellten Ständerleiter des Stators 3 mit einem variablen magnetischen Fluss. Somit wird in den Ständerleitern nach dem Induktionsgesetz ein Strom induziert, der sich am Stator 3 abgreifen lässt. Auf weitere Einzelheiten bezüglich der Stromerzeugung durch den Turbogenerator 1 wird nicht eingegangen werden.

Im Betrieb des Turbogenerators 1 erhitzen sich die Erregerwicklung des Rotors 2 und die Ständerleiter des Stators 9. Durch diese Erhitzung wird der Betrieb des Turbogenerators 1 beeinträchtigt. Zur Kühlung der Erregerwicklung und der Ständerleiter ist daher eine Gaskühlung vorgesehen. Von der Gaskühlung sind in der FIG 1 jedoch nur die beiden sich in Wellenlängsrichtung 6 an die Rotorkappen 8 anschließenden, auf der Welle angeordneten Lüfterräder 14 zu sehen. Jedes der Lüfterräder 14 bildet zusammen mit der Rotorwelle 5 ein Axialgebläse. Als Kühlgas wird insbesondere Luft oder Wasserstoff eingesetzt.

In den Zylindermantel 20 des Rotorballens 7 sind in Wellenlängsrichtung 6 durchgängige, in Umfangsrichtung 12 zueinander beabstandete Nuten 21 eingebracht. Die Vorsprünge zwischen den einzelnen Nuten werden als Rotorzähne 22 bezeichnet. In jeder Nut 21 ist ein Teil der Erregerwicklung 23 aufgenommen. Die Erregerwicklung 23 ist gebildet durch in radialer Richtung R des Rotorballens 7 übereinander angeordnete, in Wellenlängsrichtung 6 verlaufende Leiterstäbe 24. Die Leiterstäbe 24 sind gegeneinander über eine Isolierung 25 isoliert.

Zum Zylindermantel 20 des Rotorballens 7 hin sind an den Innenwandungen der Nut 21 bzw. an einander benachbarten die Nut 21 einfassenden Rotorzähnen 22 einander gegenüberliegende Profilierungen 26 vorgesehen. In diese Profilierungen 26 ist ein Nutverschlusskeil 27 eingeschoben. Der Nutverschlusskeil 27 sichert im Betrieb des Rotors 2 die Erregerwicklung 23 gegen Fliehkräfte ab.

Zwischen dem Nutgrund 28 und dem dem Zylindermantel 20 abgewandten Ende der Erregerwicklung 23 ist ein Zuführkanal 29 freigelassen. In den Leiterstäben 24 und im Nutverschlusskeil 27 sind Ausnehmungen vorgesehen, die im Montageendzustand der Erregerwicklung 23 einen durchgängigen Kühlkanal 30 ergeben. Je Nut 21 ist eine Vielzahl derartiger in Wellenlängsrichtung 6 zueinander beabstandeter Kühlkanäle 30 vorgesehen, die zum Zylindermantel hin jeweils in einer Ausströmöffnung 31 enden.

Der Nutverschlusskeil 27 ist an seiner Außenseite durchgängig mit einer Pulverlackbeschichtung 40 versehen und auf diese Weise gegenüber dem in radialer Richtung R unter ihm verlaufenden Leiterstab 24 und gegenüber dem Rotorballen 7 isoliert.

Beidendseitig weist der Rotorballen 7 einen Wickelkopf auf, der von jeweils einer Rotorkappe 8, vgl. FIG 1, abgedeckt ist. Im Wickelkopf sind übereinander in Umfangsrichtung 12 verlaufende Tangentialleiter angeordnet, die jeweils Leiterstäbe 24 benachbarter Nuten 21 miteinander verbinden. Oberhalb der Tangentialleiter sind Verbindungsleiter angeordnet, die benachbarte Nutverschlusskeile 27 miteinander verbinden. Tangentialleiter und Verbindungsleiter sind ebenfalls wie die Leiterstäbe und die Nutverschlusskeile gegeneinander über eine Isolierung isoliert. Die leitende Verbindung zwischen den Leiterstäben und den Tangentialleitern sowie zwischen den Nutverschlusskeilen und den Verbindungsleitern erfolgt über ein Verlöten. Auf diese Weise ist insgesamt die Erregerwicklung 23 gebildet, wobei die Nutverschlusskeile 27 gemeinsam mit den Verbindungsleitern eine weitere Lage der Erregerwicklung bilden.

Zur Kühlung der Erregerwicklung 23 wird vom Zuführkanal 29 aus ein Kühlgas, normalerweise Luft oder Wasserstoff, in radialer Richtung R durch die Kühlkanäle 30 und über die Ausströmöffnungen 31 in den Zwischenraum zwischen Rotor 2 und Stator 3 geleitet. Auf diese Weise wird von der Erregerwicklung 23 im Betrieb produzierte Wärme durch das Kühlgas abgeführt.

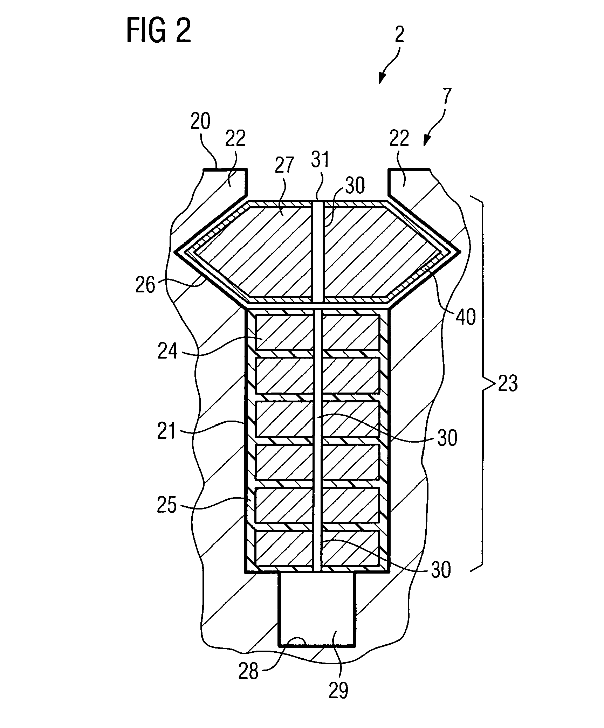

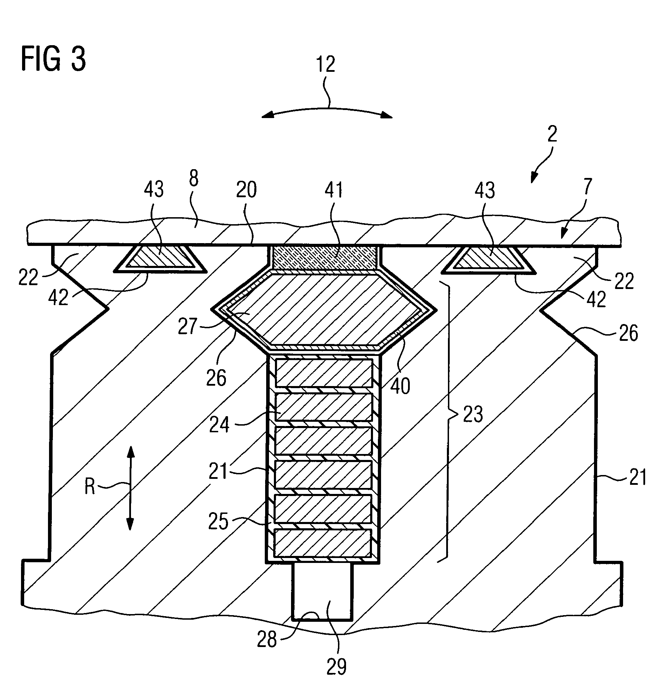

FIG 3 zeigt einen Schnitt durch die Nut 21 der FIG 2 im Bereich der linken Rotorkappe 8, vgl. FIG 1. Der Nutverschlusskeil 27 ist an seiner zur Zylindermantelfläche 20 und damit zur Rotorkappe 8 gewandten Seite mit einem Isolierzwischenstück 41 versehen. Auf diese Weise ist der nunmehr als Teil der Erregerwicklung 23 wirkende Nutverschlusskeil 27 zusätzlich elektrisch gegen die Rotorkappe 8 isoliert. Auf diese Weise lassen sich Kurzschlussströme zwischen den Nutverschlusskeilen 27 und der Rotorkappe 8 sicher vermeiden. Vergleichbare Isolierzwischenstücke sind auch an den auf den Wickelköpfen gelagerten Verbindungsleitern an ihrer zur Rotorkappe 8 gewandten Seite angeordnet.

Weiterhin sind in der FIG 3 die beidseitig der Nut 21 angeordneten und die Seitenwände der Nut 21 bildenden Rotorzähne 22 eingezeichnet. Jeder Rotorzahn 22 weist eine in Wellenlängsrichtung 6 durchgängige Dämpferstabaufnahme 42 auf. In die Dämpferstabaufnahme 42 ist jeweils ein Dämpferstab 43 eingeschoben. Die Dämpferstäbe 43 sind aus einem elektrisch leitenden Material, insbesondere aus Kupfer, gefertigt. Sie stehen im Bereich der Rotorkappen 8 mit deren Innenwandungen in leitendem Kontakt. Mit anderen Worten ähneln die beiden Rotorkappen 8, vgl. FIG 1, und die zwischen ihnen in Wellenlängsrichtung 6 verlaufenden Dämpferstäbe 43 einem Käfig. Mit der Anordnung der Dämpferstäbe 43 und den Rotorkappen 8 lassen sich asynchrone Magnetfeldschwankungen dämpfen.

Die Dämpferstabaufnahmen 42 sind mit einem trapezförmigen Querschnitt ausgebildet. Die verbreiterte Basis des Trapezes weist in radialer Richtung R zur Mittellängsachse 13 der Rotorwelle 5. Auf diese Weise ist der Dämpferstab 42 sicher in seiner Dämpferstabaufnahme 42 gehalten.

## Patentansprüche

1. Rotor (2) für einen Turbogenerator (1)
- mit einer zylinderförmigen sich mittig zu einem Rotorballen (7) verdickenden Rotorwelle (5),
- mit in den Zylindermantel (20) des Rotorballens (7) eingebrachten, in Umfangsrichtung (12) zueinander beabstandeten und in Wellenlängsrichtung (6) verlaufenden Nuten (21),
- mit von den Nuten (21) aufgenommenen Leiterstäben (24), die beidendseitig über jeweils an einem Wickelkopf gelagerte Tangentialleiter miteinander leitend verbunden sind zur Bildung einer Erregerwicklung (23) und
- mit einem Nutverschlusskeil (27) je Nut (21),
**dadurch gekennzeichnet, dass**
die Nutverschlusskeile (27) als Leiterstäbe ausgebildet sind, aus einem leitenden metallischen Werkstoff bestehen und durch an den Wickelköpfen gelagerte Verbindungsleiter miteinander leitend verbunden sind zur Vergrößerung der Erregerwicklung (23).

2. Rotor (2) nach Anspruch 1,
**dadurch gekennzeichnet, dass**
die Verbindungsleiter im Wesentlichen über den Tangentialleitern angeordnet sind.

3. Rotor (2) nach Anspruch 1 oder 2,
**dadurch gekennzeichnet, dass**
die Nutverschlusskeile (27) mit den Verbindungsleitern verlötet sind.

4. Rotor (2) nach einem der Ansprüche 1 bis 3,
**dadurch gekennzeichnet, dass**
jeder Nutverschlusskeil (27) von einer Isolierung (40) umgeben ist.

5. Rotor (2) nach Anspruch 4,
**dadurch gekennzeichnet, dass**
die Isolierung der Nutverschlusskeile (27) als Pulverlackbeschichtung (40) ausgeführt ist.

6. Rotor (2) nach einem der Ansprüche 1 bis 5,
**dadurch gekennzeichnet, dass**
die Nutverschlusskeile (27) aus einem Werkstoff mit einer hohen mechanischen Festigkeit gefertigt sind.

7. Rotor (2) nach einem der Ansprüche 1 bis 6,
**dadurch gekennzeichnet, dass**
die Nutverschlusskeile (27) aus einem elektrisch leitfähigen Werkstoff, insbesondere aus einem Bronzewerkstoff, gefertigt sind.

8. Rotor (2) nach einem der Ansprüche 1 bis 7,
**dadurch gekennzeichnet, dass**
die Nutverschlusskeile (27) derart ausgestaltet sind, dass sie hinsichtlich ihrer elektrischen Leitfähigkeit im Wesentlichen den unter ihnen angeordneten Leiterstäben (24) entsprechen.

9. Rotor (2) nach einem der Ansprüche 1 bis 8,
**dadurch gekennzeichnet,**
- **dass** jeder Wickelkopf von einer Rotorkappe (8) aufgenommen ist und
- **dass** jeder Nutverschlusskeil (27) beidendseitig an seinen von einer Rotorkappe (8) aufgenommenen Endabschnitten ein zur jeweiligen Rotorkappe (8) gewandtes Isolationszwischenstück (41) aufweist.

10. Rotor (2) nach einem der vorhergehenden Ansprüche,
**gekennzeichnet durch**
an zwischen den Nuten 21 in Wellenlängsrichtung 6 ausgebildeten Rotorzähnen (22) angeordnete, in Wellenlängsrichtung verlaufende und aus einem elektrisch leitenden Werkstoff bestehende Dämpferstäbe (43), die endseitig mit den beiden Rotorkappen (8) leitend verbunden sind.

11. Rotor (2) nach Anspruch 10,
**gekennzeichnet durch**
in Wellenlängsrichtung (6) verlaufende nutförmige Dämpferstabaufnahmen (42) zur Aufnahme der Dämpferstäbe (43).

12. Turbogenerator (1) mit einem antreibbaren Rotor (2) nach einem der Ansprüche 1 bis 11 und
mit einem den Rotor (2) umgebenden ortsfesten Stator (3).
